# EUROPEAN PATENT APPLICATION

(11) **EP 4 597 298 A1**
(43) Date of publication of application: **06.08.2025**
(21) Application number: 24154579.7
(22) Date of filing: 30.01.2024
(51) Int. Cl.: G06F 3/16

(54) **METHOD AND APPARATUS FOR CONTROLLING AN AUDIO SOURCE OF A VEHICLE**

(71) Applicant: Bayerische Motoren Werke Aktiengesellschaft, 80809 München (DE)
(72) Inventor: Zaki, Tarek, 80805 München (DE)

(57) **Abstract**

The invention relates to a method, in particular a computer-implemented method, for controlling an audio source of a vehicle. The method comprises: (i) Receiving first audio data representing a first value of a first property, in particular a first amplitude, of a first audio signal which is output by a first audio source; (ii) Receiving second audio data representing a second value of a second property, in particular a second amplitude, of a second audio signal which is to be output by a second audio source if the output of an audio signal is changed from the first audio source to the second audio source; (iii) Comparing the first value with the second value; (iv) Adapting the second value before changing the outputting audio source from the first audio source to the second audio source if the comparison results that a difference of the first value to the second value is larger than a preset difference.

## Description

The present invention is directed to a; in particular computer-implemented, method and an apparatus for controlling an audio source of a vehicle.

In modern vehicles an increasing number of devices, which can be integrated in a vehicle or which can be carried by a user, are operated. Such devices can be electronic devices with integrated displays, such as a centre information device (CID), which can be arranged at a middle console of an interior space of the vehicle, and which can be connected to loudspeakers of the vehicle. Further there can be additional electronic devices with integrated displays, which are for example arranged at a backside of the front seats for entertainment for rear seat passengers. Also these additional electronic devices be connected to loudspeakers of the vehicle, or they can comprise integrated loudspeakers. Further there can be electronic mobile devices with integrated loudspeakers of a passenger, such as smartphones or another mobile device. Thereby each of these devices can generate and initiate or directly output audio signals. In the case of a smartphone there can be even different programs (apps), wherein each of these apps can be a source of an audio signals. For example, there can be a music app, a gaming-app, a phone-app, navigation-app or other apps.

There can be a situation where a change from one app to another or even from one audio device to another can occur. For example, there can be a situation at which music is output through a loudspeaker of the vehicle and during this output a phone call is received by the smartphone. In this situation the audio device can change, so that the music is automatically switched off or is set to standby and the loudspeaker outputs a ringing sound of the phone followed by the voice of the calling person. Another common situation can be that while music is output, a traffic-safety announcement by a radio occurs.

In the described situations a change of audio sources in operation occurs and due to the change of audio sources a distraction of the driver can occur.

Common solutions while changing audio sources can provide a smooth decrease of a volume level to zero of an audio source which is currently outputting acoustic signals and wherein the output of this audio source is to be stopped, and this can be followed or partially overlapped by a smooth increase of a volume level from zero of another audio source which should then output another acoustic signal.

However, a distraction of the driver can also occur because each of the audio sources may have different audio settings which can lead to different sound characteristics and in particular to different volume levels, which lead to different characteristics of the audio signal which are output. These differences can cause a distraction to the driver when a change from one audio source to another audio source occurs.

It is an object of the present invention to provide an improved controlling of an audio source when changing between audio sources.

A solution to this problem is provided by the teaching of the independent claims. Various preferred embodiments of the present invention are provided by the teachings of the dependent claims.

A **first aspect** of the solution is directed to a method, in particular a computer-implemented method, for controlling an audio source of a vehicle. The method comprises: (i) Receiving first audio data representing a first value of a first property, in particular a first amplitude, of a first audio signal which is output by a first audio source; (ii) Receiving second audio data representing a second value of a second property, in particular a second amplitude, of a second audio signal which is to be output by a second audio source if the output of an audio signal is changed from the first audio source to the second audio source; (iii) Comparing the first value with the second value; (iv) Adapting the second value before changing the outputting audio source from the first audio source to the second audio source if the comparison results that a difference of the first value to the second value is larger than a preset difference.

Where the term "comprising" or "including" is used in the present description and claims, it does not exclude other elements or steps. Where an indefinite or definite article is used when referring to a singular noun e.g. "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term "one" as used herein are defined in the sense of "one or more". The terms "another" and "a further" and any other variant thereof are to be understood in the sense of "at least one more".

The term "plural" as used herein shall be understood in the sense of "two or more".

The term "configured" or "set up" to perform a certain function (and respective variations thereof) as used herein shall be understood as meaning that the corresponding device is already present in a configuration or setting in which it can perform the function or that it is at least adjustable - i.e. configurable - in such a way that it can perform the function after corresponding adjustment. In this context, the configuration can be carried out, for example, by means of a corresponding setting of parameters of a process sequence or of switches or the like for activating or deactivating functionalities or settings. In particular, the device can have several predetermined configurations or operating modes, so that the configuration can be performed by means of a selection of one of these configurations or operating modes.

In the following, certain preferred embodiments of the method will be described, which can be arbitrarily combined with each other or with other aspects of the present solution, unless such combination is explicitly excluded or technically impossible.

The term "audio signal" as used herein shall be understood in particular as an acoustic signal which can be output by an audio source to an acoustic output device, such as a loudspeaker which may be integrated in the audio device or which may be connected to the audio device.

The term "audio source" as used herein shall be understood in particular as an audio device or an audio application which is stored at a device and wherein the application, such as a music-application, is configured to generate audio data which can be output as audio signal by the device. In particular the audio device can be an electronic device, such as a smartphone, which may comprise several applications, also known as "apps", each of which can provide audio data, so that such an electronic device may comprise several audio sources.

The term "audio data" as used herein shall be understood in particular as data representing properties, in particular physical properties, of an audio signal, in particular an acoustic signal which can comprise one or more frequencies and/or amplitudes with respective values. Thereby this audio data may be stored in an audio device.

The term "substantially equal" as used herein shall be understood in particular that two values, in particular property values, in particular amplitude values, of audio signals, do not deviate from each other by more than 10%, in particular not more than 5%.

The term "control unit" as used herein shall be understood in particular as an electronic device comprising a sending and receiving unit for sending and receiving wireless signals, such as electromagnetic signals and/or wire-based signals via cable such as electrical signals. Such a control unit may further include a microprocessor for analysing data and a memory for storing data.

When a change from one audio source to another audio source occurs, for example from a music app in a smartphone to a navigation app of the same smartphone, or from an app of the smartphone to a tuner of the vehicle, the first value of the first property can be different to the second value of the second property. The method according to the first aspect can enable that this difference between the first value and the second value may be reduced before changing an output from the first audio source to the second audio source. In this way a distraction of a driver of a vehicle which may occur because of the change of the audio sources can be reduced. As a result, the safety of driving can be increased.

In the following, certain preferred embodiments of the method will be described, which can be arbitrarily combined with each other or with other aspects of the present solution, unless such combination is explicitly excluded or technically impossible.

In some embodiments the adapting occurs such that after the adapting the first value and the second value are substantially equal. This can enable that the first audio signal and the second audio signal may be perceived more similarly regarding the first property and the second property. This can cause even less distraction to the driver and increases the safety of driving further.

In some embodiments the method comprises receiving a number of first values over a preset time period, comparing each of the first values with a previously received first value and adapting, in particular decreasing or increasing, the second value proportionally to the first values if the comparison results that within the preset time period a change, in particular a decrease or increase, of the first values has occurred. Preferably the second value is increased if the first values have increased, or preferably the second value is decreased, if the first values have decreased. This enables an adaption of the second value of the second audio source in case the first value of the first audio source changes over time. This can occur for example when an additional noise source in the environment occurs, for example when an airplane flies over or when a window of the vehicle is opened and an increased wind-noise is perceived inside the car, and in response the first value of the first audio signal is increased. By increasing the second value of the second audio source this can be compensated such that the second audio source can be perceived by the driver with a similar volume value to the first value when the audio sources are changed.

In some embodiments the method comprises receiving a number of first values over a preset time period, determining an average value of the number of first values, and wherein the adaption of the second value occurs if a difference of the average value of the first values to the second value is larger than the preset difference. This enables an improved, in particular more realistic, representation of the first property compared to using a single first value of the first property. In this way also the adaption of the second value of the second property is improved.

In some embodiments the method comprises analysing if the second audio signal comprises speech, and decreasing the first property below a predetermined value, if the analysis results that the second audio signal comprises speech. In this way the first audio signal is adapted if speech, such as a conversation in the vehicle is determined. Thereby, a distraction to the driver can be reduced as the first property is decreased and a contact to the driver for decreasing the first property may not be required.

A second aspect of the solution is directed to an apparatus which is configured to perform the method of the first aspect.

In some embodiments the apparatus comprises: (i) A first audio source; (ii) A second audio source; (iii) A control unit, which is configured: (iii-a) To receive first audio data representing a first value of a first property of a first audio signal which is output by a first audio source; (iii-b) to receive second audio data representing a second value of a second property of a second audio signal which is to be output by a second audio source if the output of an audio signal is changed from the first audio source to the second audio source; (iii-c) to compare the first value with the second value; (iii-d) to adapt the second value before changing the outputting audio source from the first audio source to the second audio source if the comparison results that a difference of the first value to the second value is larger than a pre-set difference.

A **third aspect** of the present solution is directed to a vehicle comprising the apparatus of the second aspect.

A **fourth aspect** of the present solution is directed to a computer program with instructions for causing the apparatus of the second aspect to perform the steps of the method of the first aspect.

In particular, the computer program may be stored on a non-volatile medium. Preferably, this is a data carrier in the form of an optical data carrier or a flash memory module. This may be advantageous if the computer program as such is to be traded independently of a processor platform on which the one or more programs are to be executed. In another implementation, the computer program may be present as a file on a data processing unit, particularly a server, and downloadable via a data connection, such as the Internet or a dedicated data connection, such as a proprietary or local area network. In addition, the computer program may have a plurality of interacting individual program modules.

The various embodiments and advantages described above in connection with the first aspect similarly apply to the other aspects.

Further advantages, features and applications are provided in the following detailed description of preferred embodiments and the appended figures, wherein:
**Fig. 1** schematically illustrates a flowchart illustrating an embodiment of a method; and
**Fig. 2** schematically illustrates a vehicle including an embodiment of an apparatus.

In the figures, identical reference signs are used for the same or mutually corresponding elements.

### DETAILED DESCRIPTION OF EMBODIMENTS

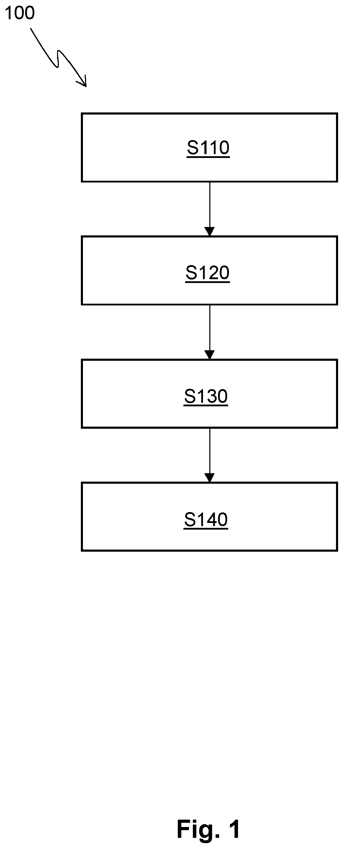

**Fig. 1** schematically illustrates a flowchart 100 illustrating an embodiment of a method.

A first step S110 of the method comprises receiving first audio data representing a first value of a first amplitude of a first audio signal which is output by a first audio source 210.

A further step S120 of the method comprises receiving second audio data representing a second value of a second amplitude of a second audio signal which is to be output by a second audio source 220 if the output of an audio signal is changed from the first audio source 210 to the second audio source 220.

A further step S130 of the method comprises comparing the first value with the second value.

A further step S140 of the method comprises adapting the second value before changing the outputting audio source from the first audio source 210 to the second audio source 220 if the comparison results that a difference of the first value to the second value is larger than a preset difference.

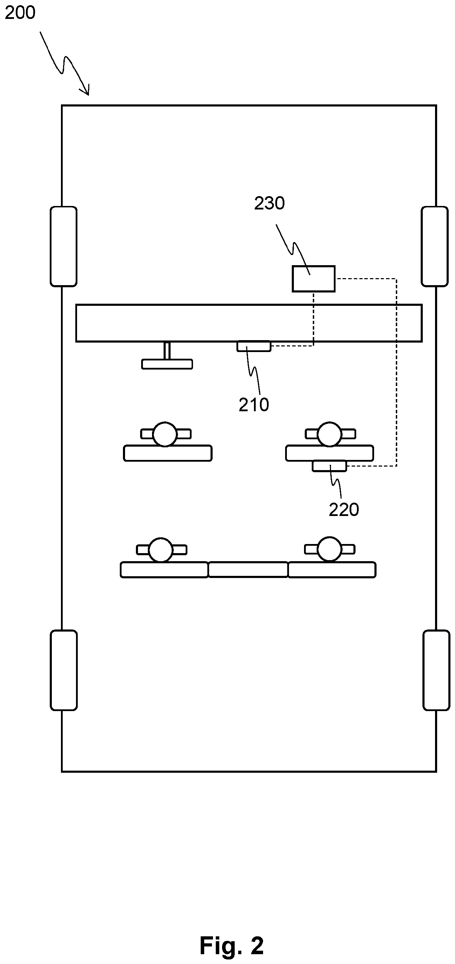

**Fig. 2** schematically illustrates a vehicle 200 including an embodiment of an apparatus of. In an interior space of the vehicle 200 a first audio source 210, such as an electronic device, such as a centre information display (CID) which is connected to loudspeakers (not shown here) of the vehicle 200, is arranged. Further, a second audio source 220, which for example can be a further electronic device at a backside of a seat, for example a display for consuming entertainment programs for passengers at the rear seats, is arranged. This second audio source 220 may be coupled to different loudspeakers (not shown here) than the first audio source, or it may comprise integrated loudspeakers. Further it is possible that both the first audio source 210 and the second audio source 220 are connected to in-cabin speakers (not shown here). Both the first audio source 210 and the second audio source 220 are coupled to a control unit 230 of the vehicle 200, such that wireless, or wire-based signals can be exchanged between the audio sources 210, 220 and the control unit 230. It is also possible that the first audio source 210 and the second audio source 220 are controlled by separate control units and these control units are connected by a communication bus, e.g., by an Ethernet connection (not shown here). Wireless signals may comprise electromagnetic signals wherein wire-based signals may be transmitted via wire or cable as electrical signals. In this way the control unit 230 is configured to read out audio data each of the first audio source 210 and the second audio source 220. The control unit is further configured to analyse these audio data and can adapt at least some of the audio data to control the audio sources 210, 220 depending on the analysis. These audio data can comprise data which represent physical characteristics or properties of the audio signals, such as frequencies and/or amplitudes and their respective values. The control unit 230 is configured to read out this data at any time from the audio sources 210, 220, i.e. before or during a corresponding audio signal is output by a loudspeaker. In this way the control unit 230 can analyse, for example compare a first value of a first amplitude of a first audio signal with a second value of a second amplitude of a second audio signal, the audio data before or during a corresponding audio signal is output by a loudspeaker. Further the control unit 230 is configured to adapt the first audio signal and the second audio signal depending on the analysis. For example, when such a comparison results that a difference of the first value to the second value is larger than a preset difference the control unit 230 is configured to initiate an adaption of the second value before changing the outputting audio source from the first audio source 210 to the second audio source 220, in particular so that the second value becomes substantially equal to the first value.

While above at least one exemplary embodiment has been described, it has to be noted that a great number of variations thereto exists. Furthermore, it is appreciated that the described exemplary embodiments only illustrate non-limiting examples of how the present solution can be implemented and that it is not intended to limit the scope, the application or the configuration of the herein-described apparatus' and methods. Rather, the preceding description will provide the person skilled in the art with constructions for implementing at least one exemplary embodiment of the solution, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 100: Flowchart of an embodiment of a method
- S110: Receiving first audio data
- S120: Receiving second audio data
- S130: Comparing
- S140: Adapting

- 200: Vehicle
- 210: First audio source
- 220: Second audio source
- 230: Control unit

## Claims

1. A Method for controlling an audio source (210, 220) of a vehicle (200), comprising:
Receiving first audio data (S110) representing a first value of a first property of a first audio signal which is output by a first audio source (210);
Receiving second audio data (S120) representing a second value of a second property of a second audio signal which is to be output by a second audio source (220) if the output of an audio signal is changed from the first audio source (210) to the second audio source (220);
Comparing (S130) the first value with the second value;
Adapting (S140) the second value before changing the outputting audio source from the first audio source (210) to the second audio source (220) if the comparison results that a difference of the first value to the second value is larger than a preset difference.

2. The Method of claim 1, wherein the adapting occurs such that after the adapting the first value and the second value are substantially equal.

3. The Method of claim 1 or 2, comprising receiving a number of first values over a preset time period, comparing each of the first values with a previously received first value and adapting the second value proportionally to the first values if the comparison results that within the preset time period a change of the first values has occurred.

4. The Method of any of the preceding claims, comprising receiving a number of first values over a preset time period, determining an average value of the number of first values, and wherein the adaption of the second value occurs if a difference of the average value of the first values to the second value is larger than the preset difference.

5. The Method of any of the preceding claims, comprising analysing if the second audio data of the second audio signal comprises speech, and decreasing the first value below a predetermined value, if the analysis results that the second audio signal comprises speech.

6. The Method of any of the preceding claims, comprising:
Applying an algorithm for speech recognition to the first audio data and to the second audio data;
Reducing the property of one of the first audio signal and the second audio signal if the analysis results that the audio data of the other of the first audio signal and the second audio signal includes speech.

7. An Apparatus which is configured to execute the method according to one of the preceding claims.

8. The apparatus of claim 7, comprising:
A first audio source (210);
A second audio source (220);
A control unit (230), which is configured:
To receive first audio data representing a first value of a first property of a first audio signal which is output by a first audio source (210);
to receive second audio data representing a second value of a second property of a second audio signal which is to be output by a second audio source (220) if the output of an audio signal is changed from the first audio source (210) to the second audio source (220);
to compare the first value with the second value;
to adapt the second value before changing the outputting audio source from the first audio source (210) to the second audio source (220) if the comparison results that a difference of the first value to the second value is larger than a preset difference.

9. A vehicle (200) comprising the apparatus of claim 7 or 8.

10. A computer-program with instructions for causing the apparatus of claim 7 or 8 to perform the steps of the method of any one of claims 1 to 6.
